# EUROPEAN PATENT SPECIFICATION

(11) **EP 3 078 550 B1**
(45) Date of publication and mention of the grant of the patent: **20.05.2020**
(21) Application number: 16164564.3
(22) Date of filing: 08.04.2016
(51) Int. Cl.: B60L 50/40, B60L 58/20

(54) **DUAL VOLTAGE ELECTRICAL INSTALLATION OF A HEAVY VEHICLE**
ELEKTRISCHE DOPPELSPANNUNGSANLAGE EINES SCHWEREN FAHRZEUGS
INSTALLATION ÉLECTRIQUE BITENSION D'UN VÉHICULE LOURD

(30) Priority: 10.04.2015 IT TO20150211
(43) Date of publication of application: 12.10.2016
(73) Proprietor: IVECO S.p.A., 10156 Torino (IT)
(72) Inventor: MANTOVANI, Giorgio, 16148 GENOVA (IT)
(74) Representative: Franzolin, Luigi

(56) References cited:
- DE-A1- 19 614 365
- DE-A1-102009 028 965
- DE-A1-102012 011 840

## Description

### Technical field of the invention

The invention relates to the field of electrical installations for heavy vehicles comprising two distinct power supply lines with different voltages.
An example of dual voltage electrical installation is disclosed on DE102012011840, whose features are described in the preamble of claim 1.

### Known state of the art

In some kinds of heavy vehicles, such as light vehicles, it is becoming more and more common to use a second electrical installation with a voltage that is greater than the one of traditional installations with 12V or 24V.
Traditional 12 or 24V electrical installations are still used because they ensure an easiness to find - already available in the market - widely tested components, such as, for example, the starter motor of the internal combustion engine.
The second "high voltage" line, typically with 48V or more, on the other hand, is associated with advanced operating modes of the vehicle, for example
- carrying out regenerative braking processes,
- helping the internal combustion engine deliver a torque to the drive wheels,
- driving the vehicle exclusively in electrical mode, and/or
- supplying the auxiliary electrical systems with a significant power.
Motor generators used to enable these advanced operating modes of the vehicles are usually connected to a power take-off (PTO) of the internal combustion engine through a predetermined gear ratio and, generally speaking, they are not capable, especially when they are cold, of starting the heat engine of a heavy vehicle due to the manufacturing features of the motor generators themselves and also because of the aforesaid predetermined gear ratio.
For this reason, these high voltage motor generators - "high voltage" meaning a voltage greater than the traditional 12V or 24V - keep being combined with traditional "low voltage" starter motors, i.e. starter motors supplying 12V or 24V.
Therefore, "low voltage" indicates a traditional voltage of 12V or 24V.
This forces manufacturers to provide, on board the vehicle, both a low voltage battery assembly with a relative electrical generator and a high voltage battery assembly with the aforesaid motor generator.

Furthermore, the low voltage battery assembly must be suited to deliver high currents during the internal combustion engine starting steps. Supercapacitors, much lighter and more long-lasting than classical lead-acid batteries, turn out to be very adequate for these performances, but, on the other hand, they are not capable of keeping the energy stored for long amounts of time, due to intrinsic parasitic currents and to their reduced capacity.
On the contrary, the high voltage battery assembly is usually designed to store great quantities of energy, but it is not capable of delivering high currents due to the nature of the batteries used, which commonly have an energy and a capacity that are limited to the actual energy needs of the vehicle.
Therefore, the different operating needs of the vehicle components force manufacturers to use two separate electrical lines with two different voltages and with relative storage, generation and use means.

### Summary of the invention

An object of the invention is to eliminate some heavy and expensive electrical components, which are deemed to be superfluous, and to implement supercapacitors, though ensuring reliability in the starting of the vehicle system and of the internal combustion engine even after long standstill times.

Another object of the invention is to preserve the state of charge of the high voltage battery assembly.

These and other objects are reached through the dual voltage electrical installation for a heavy vehicle and a heavy vehicle as claimed in the appended set of claims.

The idea on which the invention is based is that of removing a low voltage electrical generator and of removing the relative low voltage battery assembly in order to replace it with a supercapacitor or energy storage means with similar features as well as of introducing charging means for the supercapacitor, which are adapted to charge said supercapacitor from said high voltage battery assembly.

More in particular, said charging means do not consume energy when they do not need to charge said supercapacitor, as they, together with the relative electronic control equipment, are entirely deactivated.

### Brief description of the figures

Further objects and advantages of the invention will be best understood upon perusal of the following detailed description of an embodiment thereof (and of relative variants) with reference to the accompanying drawings merely showing non-limiting examples, wherein:
- figure 1 shows an approximate circuit diagram of a first variant, not making part of the present invention but useful for its understanding, of a dual voltage electrical installation according to the invention;
- figure 2 shows an approximate circuit diagram of a second variant of a dual voltage electrical installation according to the invention.

### Detailed description of embodiments

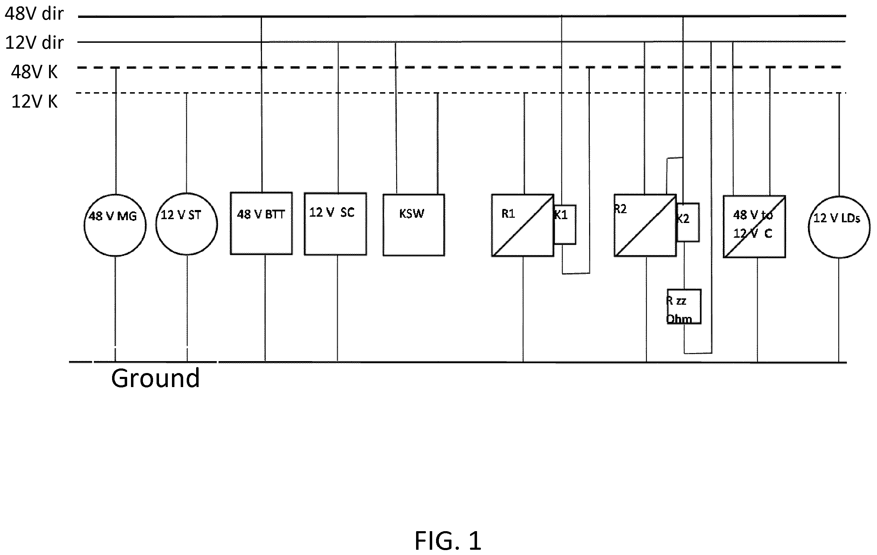

An electrical installation according to the invention comprises two electrical lines "48V dir" and "12V dir", which are directly connected to the positive terminal of the respective energy storage means, and two lines, which are supplied with power only when the ignition key of the vehicle is inserted in the board "48V K" and "12V K". Therefore, with reference to the accompanying figures, the hicker and continuous line schematically represents a bar that is always supplied with a high voltage, for example 48V, and therefore is indicated with "48V dir", the thicker and broken line schematically represents a bar that is supplied with a high voltage only when the ignition key is turned in the board and therefore is indicated with "48V K", the thinner and continuous line schematically represents a bar that is always supplied with a low voltage, for example 12V, and therefore is indicated with "12V dir", the thinner and broken line schematically represents a bar that is supplied with a low voltage only when the ignition key is turned in the board and therefore is indicated with "12V K".
These four lines are gathered in the upper part of the figures, whereas another line, which is parallel to the first four lines and is arranged in the lower part of the figures, represents the "ground" of the vehicle and coincides with the relative chassis.
From the left to the right in figure 1, at least the following components are connected to the dual voltage electrical installation:
- An electric motor generator MG, which is mechanically connected to a PTO of the internal combustion engine and is electrically connected between said line 45 K and the ground,
- A starter motor S, which is connected to the drive shaft of the internal combustion engine in a known manner and is electrically connected between said line 12V and the ground,
- High voltage energy storage means BTT, which are connected between the line 48V dir and the ground,
- One or more supercapacitors arranged in an array, which define low voltage energy storage means SC and are connected between the line 12V dir and the ground,
- A switch, which is associated with the ignition key, is adapted to connect said line 12V dir to said line 12V k so as to supply low voltage loads, and is adapted to connect, through the relay R1, said line 48V dir to said line 48V k so as to supply high voltage loads; preferably, the line 48V k is supplied with power through a relay R1 that is supplied by line 12V K,
- Comparator means R2, preferably a relay with settable thresholds, which is adapted to measure the difference of potential (ddp) of the line 12V dir relative to the ground, i.e. to monitor the state of charge of the supercapacitor SC and to control charging means Rzz of the supercapacitor SC by means of the energy stored in the high voltage energy storage means BTT,
- A DC-DC voltage converter C, which is supplied by said line 48V k and is adapted to charge said supercapacitor SC by means of the energy stored in the high voltage energy storage means BTT,
- Generic low voltage loads.
The comparator means R2 preferably control the charging means Rzz by means of a coil and a contact K2, which are connected in series to the charging means Rzz between the line 48V dir and the line 12V dir.
According to the variant of figure 1, not making part of the present invention but useful for its understanding, the charging means Rzz, used to charge the supercapacitor SC by means of the energy stored in the high voltage energy storage means BTT, are manufactured by means of
- A resistor, which acts as a dissipative current limiter, which is connected between the line 48V dir and the line 12V dir by said comparator means R2, and/or
- A diode or an array of diodes mutually connected in series, which act as a non-dissipative current limiter, which is connected between the line 48V dir and the line 12V dir by said comparator means R2, and/or
- One or more transistors mutually connected in parallel, which act as a non-dissipative current limiter, which is connected between the line 48V dir and the line 12V dir and is controlled in its switching by said comparator means R2.

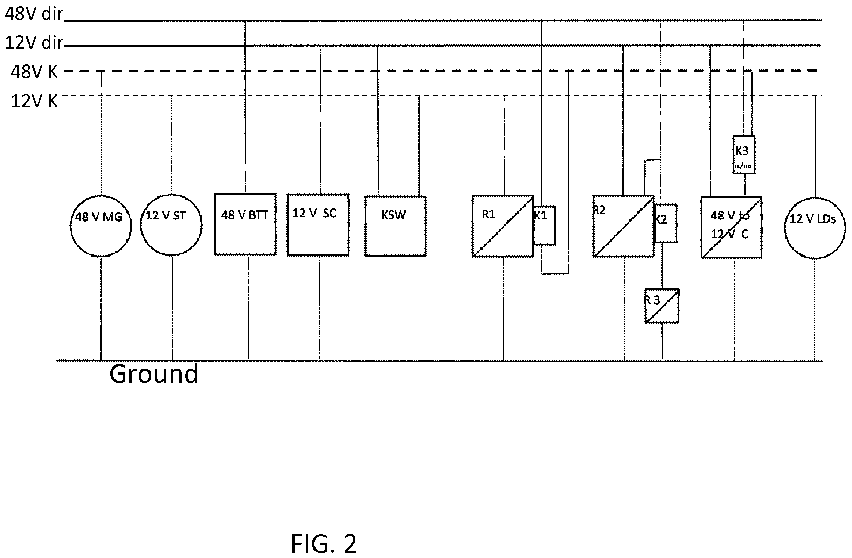

Figure 2, on the other hand, shows a variant according to the present invention in which the comparator means R2 are configured to supply, through the exchange contact K3 with the highest voltage, the DC-DC voltage converter, regardless of the fact that the ignition key is inserted in the board and, thus, the relay R1 is active.
Preferably, the relay R2 controls a further relay R3, which is connected in series to the contact K2 between the electrical line 48V dir and the ground. This further relay R3 controls an exchange contact K3, which is adapted to switch the 48V input of the DC-DC converter C between the line 48V dir and 48V K.
Furthermore, this variant, by ensuring a galvanic insulation between the low voltage circuits and the high voltage circuits, allows the invention to be also applied to systems with a high voltage greater than 60V.
When the DC-DC converter C is connected to the electrical line 48V dir, it can charge the supercapacitor SC regardless of the state of the ignition key and without connecting possible further 48V loads connected to the electrical line 48V K.
Owing to the above, it is evident that the comparator means R2 in combination with
- the charging means Rzz or
- the DC-DC voltage converter
operate regardless of whether the key is inserted in the board, as the aforesaid power supply is carried out by the line 48V dir and not by the line 48V K.
The comparator means R2 are preferably manufactured by means of a relay with preferably settable thresholds, which enables a proper hysteresis, which means that it activates when the difference of potential of the line 12V dir relative to the ground is below a first threshold T1 and deactivates when said difference of potential exceeds a second threshold T2 greater than T1.
Both a resistor and the Dc-Dc converter, because of the respective electronic control equipment, which is always active, lead o a constant energy consumption; therefore, the chance to activate them by means of a comparator allows the energy contained in the higher voltage batteries BTT to be preserved.
On the other hand, the diode or the array of diodes connected in series as well as the transistor and the array of transistors connected in parallel, without voltage control loop, would not be capable of ensuring the 12-13V or 24-26V in the supercapacitor, ad they are connected between two "dir" lines. This means that, if the voltage of the high voltage batteries decreased by deltaV below their nominal value, for example 48V, this deltaV value would also show up in the supercapacitor.
Therefore, the comparator means R2, by measuring the difference of potential of the low voltage "dir" line and by operating in combination with
- the charging means Rzz or
- the DC-DC voltage converter,
both preserve the electrical charge stored in the high voltage storage means BTT and ensure a correct charging of the supercapacitor, which is necessary to start the internal combustion engine even after some days.
As far as the description of operation is concerned, the relay R2 measures the difference of potential between the positive terminal and the negative terminal of an array of supercapacitors continuously and regardless of the state of the vehicle ignition key. When the difference of potential is below T1, the relay R2 orders the transfer of energy from the high voltage batteries BTT to the supercapacitor through the charging means Rzz of through the DC-DC converter C and prevents them from absorbing energy when they are inactive. At the same time, the relay, in combination with the charging means Rzz or with the DC-DC converter C, is configured to charge the supercapacitor at the right low voltage nominal voltage, regardless of the voltage state of the high voltage battery BTT. Evidently, this condition occurs when you keep into account possible decays of the state of the charge of the high voltage battery in the sizing of the resistor or of the diode acting as voltage limiting means, whereas this condition always occurs when the voltage limitation is carried out by means of the transistor or the DC-DC converter, as the state of conduction can easily be controlled.

Therefore, whereas the resistor and the diode are fixed current or voltage limitation means, the transistor and the DC-DC converter are adjustable voltage limiting means.

The non-limiting example described above can be subjected to variations, without for this reason going beyond the scope of protection of the invention, comprising all equivalent embodiments for a person skilled in the art.

Whereas the expression "low voltage" implies the classical 12 or 24V, it should be clear that, based on the insulation chosen for the high voltage circuit, "high voltage" can mean any voltage greater than 24V and smaller that 60V in case of vehicle with "LV" - namely "low voltage" - installation, or greater than 60V in case of EV, PHEV and HEV vehicles with drive batteries > 60 Vdc.
Since, in order to exceed the 60V threshold, technical standards require the electrical installation to be insulated from the chassis of the vehicle, then the solution involving the activation of the DC-DC converter regardless of the insertion of the ignition key in the board to charge the supercapacitor can be more easily implemented in systems with a high voltage greater than 60VDC, but this does not exclude the possibility to also implement this solution in installations with DC voltages below 60V. To this regard, the standard of reference of IEC 6469.

## Claims

1. Dual voltage electrical installation of a heavy vehicle comprising:
- high voltage energy storage means (BTT),
- at least one supercapacitor (SC) or an electrical storage device with similar features, defining low voltage energy storage means (12V or 24V),
- a first high voltage line (48V dir) permanently connected with said high voltage energy storage means (BTT),
- a first low voltage line (12V dir) always connected with said at least one supercapacitor (SC),
- a second high voltage line (48V K) connected with said first high voltage line, subordinate to a state of activation of a vehicle ignition key (KSW),
- a second low voltage line (12V K) connected with said first low voltage line, subordinate to a state of activation of said vehicle ignition key (KSW),
- charging means (C) comprising a DC-DC voltage converter (C) connected to said second high voltage line (48V K) and adapted to charge said at least one supercapacitor (SC) by means of the energy stored in said high voltage energy storage means (BTT),
- comparator means (R2, K2), configured to
▪ measure a state of charge of the supercapacitor (SC) and, based on said state of charge, control said charging means (C) of the supercapacitor (SC) regardless of a state of activation of a vehicle key (KSW),
▪ completely disconnect said charging means (C) from the power supply when it is not necessary to charge said supercapacitor (SC);
wherein said charging means (C) consist of adjustable voltage limiting means and consist of said DC-DC voltage converter (C) connected between said first high voltage line (48V dir) and said first low voltage line (12V dir) by means of said comparator means (R2, K2, R3, K3)
and **characterized in that**
said comparator means (R2, K2, R3, K3) comprise a first relay (R2) connected between said first low voltage line (12V dir) and a vehicle mass (ground) that controls a first coil (K2) arranged in series with a second relay (R3) between said first high voltage line (48V dir) and said vehicle mass (ground), the second relay (R3) controlling a second coil (K3) adapted to switch a power supply port of said DC-DC voltage converter (C) between said first high voltage line (48V dir) and said second high voltage line (48V k).

2. Installation according to claim 1, wherein said comparator means consist of a relay having a first voltage activation threshold (T1) and a second voltage deactivation threshold (T2) greater than said first voltage activation threshold (T1).

3. Installation according to any one of the preceding claims, completely without any low voltage electrical energy generation means.

4. Installation according to any one of the preceding claims, further comprising
- a high voltage electric motor generator (MG) adapted to supply said second high voltage line (48V K),
- a low voltage starter motor (S) adapted to be supplied by said second low voltage line (12 V).

5. Installation according to claim 3, wherein said high voltage electric motor generator (MG) is the one and only motor generator of the installation.

6. Heavy vehicle comprising a dual voltage electrical installation according to any one of claims 1 to 5.

## Patentansprüche

1. Elektrische Doppelspannungs-Installation eines Schwerlastfahrzeugs, umfassend:
- Hochspannungsenergiespeichermittel (BTT),
- mindestens einen Superkondensator (SC) oder eine elektrische Speichervorrichtung mit ähnlichen Eigenschaften, der oder die Niedrigspannungsenergiespeichermittel (12V oder 24V) definiert,
- eine erste Hochspannungsleitung (48V dir), die dauerhaft mit den Hochspannungsenergiespeichermitteln (BTT) verbunden ist,
- eine erste Niederspannungsleitung (12V dir), die immer mit mindestens einem Superkondensator (SC) verbunden ist,
- eine zweite Hochspannungsleitung (48V K), die mit der ersten Hochspannungsleitung verbunden ist, untergeordnet einem Zustand der Aktivierung eines Fahrzeug-Zündschlüssels (KSW),
- eine zweite Niederspannungsleitung (12V K), die mit der ersten Niederspannungsleitung verbunden ist, untergeordnet einem Zustand der Aktivierung des Fahrzeug-Zündschlüssels (KSW),
- Lademittel (C), umfassend einen Gleichspannungswandler (C), der mit der zweiten Hochspannungsleitung (48V K) verbunden und ausgeführt ist, um mindestens einen Superkondensator (SC) mittels der in den Hochspannungsenergiespeichermitteln (BTT) gespeicherten Energie zu laden,
- Vergleichsmittel (R2, K2), ausgeführt, um
∘ einen Ladezustand des Superkondensators (SC) zu messen und, basierend auf dem Ladezustand, die Lademittel (C) des Superkondensators (SC) unabhängig von einem Zustand der Aktivierung eines Fahrzeug-Zündschlüssels zu steuern,
∘ die Lademittel (C) vollständig von der Stromversorgung zu trennen, wenn es nicht erforderlich ist, den Superkondensator (SC) zu laden;
wobei die Lademittel (C) aus einstellbaren Spannungsbegrenzungsmitteln und dem Gleichspannungswandler (C) bestehen, der zwischen der ersten Hochspannungsleitung (48V dir) und der ersten Niederspannungsleitung (12V dir) mittels der Vergleichsmittel (R2, K2, R3, K3) geschaltet ist,
**dadurch gekennzeichnet, dass**
die Vergleichsmittel (R2, K2, R3, K3) ein erstes Relais (R2) umfassen, dass zwischen der ersten Niederspannungsleitung (12V dir) und einer Fahrzeugmasse (ground) geschaltet ist, und welches eine erste Spule (K2) steuert, die in Reihe mit einem zweiten Relais (R3) zwischen der ersten Hochspannungsleitung (48V dir) und der Fahrzeugmasse (ground) angeordnet ist, wobei das zweite Relais (R3) eine zweite Spule (K3) steuert, ausgeführt um einen Stromversorgungsanschluss des Gleichspannungswandlers (C) zwischen der ersten Hochspannungsleitung (48V dir) und der zweiten Hochspannungsleitung (48C K) umzuschalten.

2. Installation nach Anspruch 1, wobei die Vergleichsmittel aus einem Relais bestehen, das einen ersten Spannungsaktivierungsschwellenwert (T1) und einen zweiten Spannungsdeaktivierungsschwellenwert (T2) hat, der größer als der erste Spannungsaktivierungsschwellenwert (T1) ist.

3. Installation nach einem der vorstehenden Ansprüche, völlig ohne irgendwelche elektrische Energieerzeugungsmittel für Niederspannung.

4. Installation nach einem der vorstehenden Ansprüche, weiter umfassend
- einen elektrischen Hochspannungs-Motorgenerator (MG), ausgeführt um die zweite Hochspannungsleitung (48V K) zu versorgen,
- einen Niederspannungs-Anlasser (S), ausgeführt, um von der zweiten Niederspannungsleitung (12 V) versorgt zu werden.

5. Installation nach Anspruch 3, wobei der Hochspannungs-Motorgenerator (MG) der einzige Motorgenerator der Installation ist.

6. Schwerlastfahrzeug, umfassend eine elektrische Doppelspannungs-Installation nach einem der Ansprüche 1 bis 5.

## Revendications

1. Installation électrique bitension d'un véhicule lourd comprenant :
- des moyens de stockage d'énergie à haute tension (BTT),
- au moins un supercondensateur (SC) ou un dispositif de stockage électrique avec des éléments similaires, définissant des moyens de stockage d'énergie à basse tension (12 V ou 24 V),
- une première ligne à haute tension (48 V dir) raccordée en permanence auxdits moyens de stockage d'énergie à haute tension (BTT),
- une première ligne à basse tension (12 V dir) toujours raccordée audit au moins un supercondensateur (SC),
- une seconde ligne à haute tension (48 V K) raccordée à ladite première ligne à haute tension, subordonnée à un état d'activation d'une clé d'allumage de véhicule (KSW),
- une seconde ligne à basse tension (12 V K) raccordée à ladite première ligne à basse tension, subordonnée à un état d'activation de ladite clé d'allumage de véhicule (KSW),
- des moyens de charge (C) comprenant un convertisseur de tension CC-CC (C) raccordé à ladite seconde ligne à haute tension (48 V K) et adapté pour charger ledit au moins un supercondensateur (SC) au moyen de l'énergie stockée dans lesdits moyens de stockage d'énergie à haute tension (BTT),
- des moyens comparateurs (R2, K2) configurés pour
- mesurer un état de charge du supercondensateur (SC) et, sur la base dudit état de charge, commander lesdits moyens de charge (C) du supercondensateur (SC) indépendamment de l'état d'activation d'une clé de véhicule (KSW),
- déconnecter complètement lesdits moyens de charge (C) de l'alimentation électrique lorsqu'il n'est pas nécessaire de charger ledit supercondensateur (SC) ;
dans laquelle lesdits moyens de charge (C) se composent de moyens de limitation de tension ajustables et se composent dudit convertisseur de tension CC-CC (C) raccordé entre ladite première ligne à haute tension (48 V dir) et ladite première ligne à basse tension (12 V dir) au moyen desdits moyens comparateurs (R2, K2, R3, K3),
et **caractérisée en ce que**
lesdits moyens comparateurs (R2, K2, R3, K3) comprennent un premier relais (R2) raccordé entre ladite première ligne à basse tension (12 V dir) et une masse de véhicule (terre) qui commande une première bobine (K2) agencée en série avec un second relais (R3) entre ladite première ligne à haute tension (48 V dir) et ladite masse de véhicule (terre), le second relais (R3) commandant une seconde bobine (K3) adaptée pour commuter un port d'alimentation électrique dudit convertisseur de tension CC-CC (C) entre ladite première ligne à haute tension (48 V dir) et ladite seconde ligne à haute tension (48 V K).

2. Installation selon la revendication 1, dans laquelle lesdits moyens comparateurs se composent d'un relais présentant un premier seuil d'activation de tension (T1) et un second seuil de désactivation de tension (T2) supérieur audit premier seuil d'activation de tension (T1) .

3. Installation selon l'une quelconque des revendications précédentes, complètement sans moyen de génération d'énergie électrique à basse tension.

4. Installation selon l'une quelconque des revendications précédentes, comprenant en outre
- un moteur-générateur (MG) électrique à haute tension adapté pour alimenter ladite seconde ligne à haute tension (48 V K),
- un moteur de démarreur (S) à basse tension adapté pour être alimenté par ladite seconde ligne à basse tension (12 V).

5. Installation selon la revendication 3, dans laquelle ledit moteur-générateur (MG) électrique à haute tension est le seul et unique moteur-générateur de l'installation.

6. Véhicule lourd comprenant une installation électrique bitension selon l'une quelconque des revendications 1 à 5.
